**Europäisches Patentamt**

**European Patent Office**

**Office européen des brevets**

(11) Publication number : **0 433 580 B1**

(12) # EUROPEAN PATENT SPECIFICATION

(45) Date of publication of patent specification :
**22.12.93 Bulletin 93/51**

(51) Int. Cl.[5] : **C02F 1/62**

(21) Application number : **90118959.7**

(22) Date of filing : **04.10.90**

(54) **Metal scavengers and wastewater treatment processes.**

The file contains technical information
submitted after the application was filed and
not included in this specification

(30) Priority : **20.12.89 JP 330089/89**
**13.07.90 JP 186744/90**

(43) Date of publication of application :
**26.06.91 Bulletin 91/26**

(45) Publication of the grant of the patent :
**22.12.93 Bulletin 93/51**

(84) Designated Contracting States :
**AT BE CH DE FR GB IT LI NL SE**

(56) References cited :
**EP-A- 0 211 305**
**BE-A- 810 369**

(73) Proprietor : **MIYOSHI YUSHI KABUSHIKI**
**KAISHA**
**66-1, Horikiri 4-chome**
**Katsushika-ku Tokyo 124 (JP)**

(72) Inventor : **Moriya, Masafumi, Miyoshi Yushi**
**K.K., Nagoya Fact.**
**1366, Nishide, Noyori-cho**
**Iwakura-shi, Aichi-ken (JP)**
Inventor : **Hosoda, Kazuo, c/o Miyoshi Yushi**
**Kabushiki Kaisha**
**66-1 Horikiri 4-chome**
**Katsushika-ku, Tokyo (JP)**
Inventor : **Yoshida, Masatoshi, c/o Miyoshi**
**Yushi Kabushiki K.**
**66-1 Horikiri 4-chome**
**Katsushika-ku, Tokyo (JP)**
Inventor : **Tsukanome, Masayoshi, c/o Miyoshi**
**Yushi K. K.**
**66-1 Horikiri 4-chome**
**Katsushika-ku, Tokyo (JP)**

(74) Representative : **Müller-Gerbes, Margot,**
**Dipl.-Ing.**
**Friedrich-Breuer-Strasse 112**
**D-53225 Bonn (DE)**

EP 0 433 580 B1

Jouve, 18, rue Saint-Denis, 75001 PARIS

## Description

1) Field of the Invention:

The present invention relates to metal scavengers and also to waste-water treatment processes using the metal scavengers.

2) Description of the Related Art:

To cope with the ever-increasing contamination problem of rivers, sea and the like due to waste water from factories in recent years, more stringent regulations have been introduced to prevent waste water contamination. Under the current regulations, it is required to lower metals, which are contained in waste water, to their corresponding prescribed concentrations before discharging it as an effluent into the environment. Further, various heavy metals are contained in slag discharged from mines, fly ash occurring upon incineration of waste at waste incineration plants, sludge produced as industrial waste upon neutralizing coagulation and sedimentation or coagulant-assisted sedimentation in the course of treatment of waste water, highly contaminated soil, and the like. Runoff of such heavy metals into underground water, rivers, and sea has been increasing causing problems. It is therefore a matter of urgent necessity to establish an effective process for the treatment of such heavy metals. Stringent regulations have been imposed for heavy metals harmful to the human body - such as mercury, cadmium, lead, zinc, copper and chromium - among such heavy metals. As long as waste water is concerned, a variety of processes has therefore been proposed for the removal of metals. Known processes of this sort include ion flotation, ion exchanging, electrolytic floating, electrodialysis and reverse osmosis as well as the neutralizing coagulation and sedimentation in which an alkaline neutralizing agent such as calcium hydroxide or sodium hydroxide is added to convert metals into their hydroxides and the resultant metal hydroxides are coagulated and sedimented by a high molecular coagulant and then removed.

However, ion flotation, ion exchanging, electrolytic floating, electrodialysis and reverse osmosis involve problems in the degrees of removal of heavy metals, operability, running cost, etc. Under the circumstances, there are used only for the treatment of certain special waste water. On the other hand, the neutralizing coagulation and sedimentation process is accompanied by the problem that a sludge of metal hydroxides is formed in a large quantity but dewatering of this sludge is difficult and its transportation is also difficult due to the large volume. In addition, it is very difficult to remove heavy metals to levels below their respective effluent standards. Moreover, these sludges involve the problem that they may be dissolved again depending on the manner of disposal, thereby causing secondary contamination.

In contrast, the treatment of a waste water by a metal scavenger can overcome the problems described above, so that metal scavengers are widely used in recent years. As metal scavengers of this sort, there are known metal scavengers each of which is composed of a polyamine derivative containing one or more dithiocarboxyl groups as functional groups. Various waste water processes making use of such metal scavengers have hence been proposed (for example, Japanese Patent Publication Nos. 39358/1981, 57920/1985 and 3549/1989 and Japanese Patent Application Laid-Open No. 65788/1987).

The above polyamine derivatives have excellent metal-scavenging efficiency and upon scavenging metal ions, form large floc of high sedimentation velocity. They can therefore perform the removal of metal ions from waste water more efficiently than conventional processes. Adsorption of chromium (III), nickel, cobalt and manganese is however still not considered sufficient. Cake obtained by separating and solidifying floc formed as a result of adsorption of metals on metal scavengers is disposed by incineration or by solidification with cement. When conventional metal scavengers are used, cake has a relatively high water content. This may led to a problem such that enormous energy is required upon incineration of the cake or the cake has a large volume and requires unreasonably large labor and cost for its processing and disposal.

As a method for the disposal of metals contained in fly ash, sludge, slag or soil, it has heretofore been the practice to use such metal-containing waste for reclamation or landfilling or to dump it in the ocean after solidifying it with cement as is. These methods are however not considered to be safe because there is the potential danger that such metals may run off through the cement layer. There has hence been a strong demand for the development of an absolutely safe disposal method.

## SUMMARY OF THE INVENTION

The present invention has been completed to overcome the above problems. An object of the present invention is therefore to provide a metal scavenger which can more efficiently scavenge and remove a wide variety of metal ions in waste water, can reduce the water content of cake compared with the conventional metal scavengers and can improve the efficiency of the cake treatment and processing work. Another object of the present invention is to provide a process for the treatment of waste water by using such a metal scavenger. A further object of the present invention is to provide a process for the treatment of fly ash, sludge, slag, soil or the like, which contains at least one heavy metal, so that upon its disposal by solidification with cement and subsequent ocean dumping, reclamation or landfilling, the volume of cake can be reduced to save the cement to be used and hence to facilitate the disposal such as reclamation or land-filling and the heavy metal contained in the fly ash, sludge, slag, soil or the like can be firmly immobilized to prevent its runoff.

In one aspect of the present invention, there is thus provided a metal scavenger comprising:

a polyamine derivative containing, per molecule of a polyamine having a molecular weight not higher than 500, at least one dithiocarboxyl group or a salt thereof as an N-substituting group substituted for an active hydrogen atom of the polyamine; and

a polyethyleneimine derivative containing, per molecule of a polyethyleneimine having an average molecular weight of at least 5,000, at least one dithiocarboxyl group or a salt thereof as an N-substituting group substituted for an active hydrogen atom of the polyethyleneimine, the mixing ratio of the polyamine derivative to the polyethyleneimine derivative being 9-7 : 1 - 3 by weight.

In another aspect of the present invention, there is also provided a process for the treatment of waste water, which comprises adding the above metal scavenger to the waste water to adsorb metal ions contained in the waste water.

In a further aspect of the present invention, there is also provided a process for the treatment of fly ash, slag, soil or sludge containing at least one heavy metal, which comprises adding and mixing the above metal scavenger with the fly ash, slag, soil or sludge to immobilize the heavy metal in the presence of water.

Since floc formed as a result of scavenging of metals is large and has a high sedimentation velocity, the waste-water treatment process of the present invention, said process making use of the metal ion scavenger of the present invention, can efficiently scavenge and remove metal ions from waste water. Moreover, the use of the metal scavenger of the present invention makes it possible to reduce the incorporation of water in floc compared with the use of the conventional scavengers, whereby cake obtained by separating and solidifying the floc has a lower water content to facilitate the disposal of the cake. In addition, the metal scavengers according to the present invention have excellent scavenging ability even for metal ions such as chromium (III), nickel, cobalt and manganese to which the conventional metal scavengers do not have good adsorbability. They can therefore efficiently scavenge a still wider variety of metal ions than the conventional metal scavengers, thereby bringing about a further advantage such that the range of applicable waste waters has been enlarged.

The metal scavengers of the present invention can be used in combination with a sodium sulfide. This waste-water treatment process can form floc having a greater sedimentation velocity, thereby bringing about another advantage that more efficient treatment of waste water can be performed.

According to the treatment process of this invention for fly ash, sludge, slag, soil or the like, one or more heavy metals contained therein can be firmly immobilized. then the thus-treated fly ash, sludge, slag, soil or the like is solidified with cement and then disposed by ocean dumping or reclamation or land-filling, there is no or much less danger that the heavy metals could run off through the cement layer. Moreover, the treatment by the present process makes it possible to reduce the volume of the material treated, so that the volume upon disposal can be reduced. This bring about advantages such that less cement is required for solidification and the handling of the treated waste upon its disposal can be facilitated.

## DETAILED DESCRIPTION OF THE INVENTION AND PREFERRED EMBODIMENTS

The polyamine derivative and polyethyleneimine derivative employed in this invention are compounds which contain at least one dithiocarboxyl group -CSSH or a salt thereof, for example, an alkali metal salt such as the sodium salt or potassium salt, an alkaline salt such as the calcium salt, the ammonium salt or the like (dithiocarboxyl group and its salts will hereinafter be called merely "dithiocarboxyl groups" collectively) as an N-substituting group substituted for an active hydrogen atom bonded to a nitrogen atom of a polyamine molecule containing primary and/or secondary amino groups or a polyethyleneimine molecule containing primary and/or secondary amino groups. These polyamine derivative and polyethyleneimine derivative can be obtained for example by reacting carbon disulfide to a polyamine and a polyethyleneimine, respectively. The active hydrogen atom of the terminal dithiocarboxyl group can be replaced by treating the reaction mixture with an alkali such as sodium hydroxide, potassium hydroxide or ammonium hydroxide after the completion of the above reaction or by conducting the above reaction in the presence of an alkali. The reaction of the polyamine or polyethyleneimine and carbon disulfide is conducted in a solvent, preferably water or an alcohol at 30-100°C for 1-10 hours, especially at 40-70°C for 2-5 hours.

Usable as the polyamine forming the polyamine derivative which constitutes the metal scavenger of this invention is a polyamine having a molecular weight not greater than 500, most preferably a polyamine having a molecular weight of 60-250. Illustrative of the polyamine include alkylenediamines such as ethylenediamine, propylenediamine, butylenediamine and hexamethylenediamine; polyalkylenepolyamines such as diethylenetriamine, dipropylenetriamine, dibutylenetriamine, triethylenetetramine, tripropylenetetramine, tributylenetetramine, tetraethylenepentamine, tetra-propylenepentamine, tetrabutylenepentamine, pentaethylenehexamine, and polyamines represented by the formula $H-(NH-CH_2CH_2CH)_m-NH-CH_2CH_2NH-(CH_2CH_2CH_2NH)_n-H$ wherein m and n are integers such that m + n = 1-8); phenylenediamine; o-, m- and p-xylenediamines; iminobispropylamine; monomethylaminopropylamine; methyliminobispropylamine; 1,3-bis(aminomethyl)cyclohexane; 1,3-diaminopropane; 1,4-diaminobutane; 3,5-diaminochlorobenzene; melamine; 1-aminoethylpiperazine; diaminophenyl ether; tolidine; m-toluylenediamine. They can be used either singly or in combination.

Usable as the polyethyleneimine forming the skeleton of the polyethyleneimine derivative as the other component of the metal scavenger of this invention is a polyethyleneimine having an average molecular weight of at least 5,000, preferably an average molecular weight of 10,000-200,000, most preferably a molecular weight of 20,000-150,000.

The above polyamine and polyethyleneimine, which may hereinafter may be collectively called "polyamines", may also contain one or more alkyl, acyl and/or ß-hydroxyalkyl groups as N-substituting groups. Introduction of one or more alkyl groups as N-substituting groups can be achieved by reacting the above polyamines (or polyamines with at least one dithiocarboxyl group introduced as a substituent) with an alkyl halide. To introduce one or more acyl groups as N-substituting groups, it is only necessary to react the above polyamines (or polyamines with at least one dithiocarboxyl group introduced as substituent) with a fatty acid. Further, introduction of one or more β-hydroxyalkyl groups as N-substituting groups can be effected by reacting the polyamines (or polyamines with at least one dithiocarboxyl group introduced as a substituent) with an epoxyalkane. The N-substituting alkyl groups preferably contain 2-18 carbon atoms, while the N-substituting acyl groups preferably contain 2-30 carbon atoms. On the other hand, the N-substituted-β-hydroxyalkyl groups preferably contain 2-35 carbon atoms.

The metal scavenger of this invention is a mixture of the polyamine derivative containing at least one dithiocarboxyl group and the polyethyleneimine derivative containing at least one dithiocarboxyl group. The mixing ratio of the polyamine derivative to the polyethyleneimine derivative is 9-7:1-3 by weight.

The metal scavenger of this invention can efficiently scavenge out metals from waste water even when employed alone, as floc formed as a result of adsorption of the metals is large and moreover has a high sedimentation velocity. However, combined use of at least one of sodium sulfides such as sodium monosulfide, sodium polysulfides and sodium hydrogensulfide makes it possible to increase the sedimentation velocity of floc further so that still more efficient treatment is feasible. Exemplary sodium polysulfides include sodium disulfide, sodium trisulfide, sodium tetrasulfide and sodium pentasulfide. When the metal scavenger of this invention is used in combination with such a sodium sulfide, their mixing ratio may range from 1:99 to 99:1 with the range of from 20:80 to 98:2 being particularly preferred. When the metal scavenger of this invention and the sodium sulfide are employed in combination, they may be added to waste water after mixing them in advance or they may be added separately to waste water. The former addition is however preferred. When they are added separately, effects are substantially the same whichever additive is added first.

Upon addition of the metal scavenger of this invention to waste water, the metal scavenger can be used in an amount of 0.8-1.4 molar equivalents, especially 0.9-1.2 molar equivalents of the total amount of metal ions in the waste water when the metal scavenger is used alone. When it is used in combination with a sodium sulfide, they can be used in a total amount of 0.8-1.4 molar equivalents, notably 0.9-1.2 molar amounts of the total amount of metal ions in the waste water.

The metal scavenger of this invention can successfully scavenge metal ions in a pH range of 3-10 of waste water. It is however particularly preferred to adjust the pH of waste water to a level in a range of 4-9. Any acid or alkali can be used to adjust the pH of waste water as long as it does not impair the formation of floc. In general, hydrochloric acid, sulfuric acid, nitric acid of the like is used as an acid while sodium hydroxide, potassium hydroxide or the like is employed as an alkali.

To immobilize with the metal scavenger of this invention one or more heavy metals contained in fly ash, sludge, slag or soil, an aqueous solution of the metal scavenger in an amount about 1.2-3.0 times as much as that required to scavenge the heavy metals contained in the fly ash, sludge, slag or soil is added and mixed with the fly ash, sludge, slag or soil. Water may be added further to facilitate the mixing work. A pH range of 3-10 is preferred to scavenge heavy metals in slag. It is therefore preferable to adjust the pH of the slag with the above-described acid or alkali so that the slag has a pH in the above range upon its treatment with the metal scavenger.

The metal scavenger of this invention can scavenge metal ions such as mercury, cadmium, lead, zinc, copper. chromium (VI), arsenic, gold, silver, platinum, vanadium and thallium as efficiently as or more efficiently than conventional metal scavengers and moreover, can also efficiently scavenge metal ions whose scavenging is difficult by the conventional metal scavengers, such as chromium (III), nickel, cobalt and manganese.

The present invention will hereinafter be described in further detail by the following examples. Examples 1-8 & Comparative Examples 1-4:

Syntheses of certain polyamine derivatives and polyethyleneimine derivatives were conducted in the following manner.

Synthesis of Polyethyleneimine Derivative 1

Added to 333.3 parts by weight of a 30% aqueous solution of a polyethyleneimine having an average molecular weight of 10,000 were 400 parts by weight of a 10% aqueous solution of sodium hydroxide. The temperature of the resultant mixture was adjusted to 40°C under stirring, followed by the gradual addition of 76 parts by weight of carbon disulfide. After completion of the addition, the reaction was allowed to proceed at 45°C for 15 hours so that Polyethyleneimine Derivative 1 was obtained.

Synthesis of Polyethyleneimine Derivative 2

Added to 500 parts by weight of a 30% aqueous solution of a polyethyleneimine having an average molecular weight of 70,000 were 1,120 parts by weight of a 10% aqueous solution of sodium hydroxide. Carbon disulfide (212 parts by weight) were then reacted in a similar manner to the foregoing synthesis, whereby Polyethyleneimine Derivative 2 was obtained.

Synthesis of Polyethyleneimine Derivative 3

Added to 500 parts by weight of a 30% aqueous solution of a polyethyleneimine having an average molecular weight of 100,000 were 1,400 parts by weight of a 10% aqueous solution of sodium hydroxide. Carbon disulfide (265 parts by weight) were then reacted in a similar manner to the foregoing syntheses, whereby Polyethyleneimine Derivative 3 was obtained.

Synthesis of Polyethyleneimine Derivative 4

Added to 500 parts by weight of a 30% aqueous solution of a polyethyleneimine having an average molecular weight of 1,200 were 1,400 parts by weight of a 10% aqueous solution of sodium hydroxide. Carbon disulfide (265 parts by weight) were then reacted in a similar manner to the foregoing syntheses, whereby Polyethyleneimine Derivative 4 was obtained.

Synthesis of Polyamine Derivative 1

Charged in a four-neck flask were 40 g of ethylenediamine (molecular weight: 60) and 536 g of a 20% aqueous solution of sodium hydroxide. At 40°C, 203.7 g of carbon disulfide were added dropwise under vigorous agitation through a dropping funnel. After completion of the dropwise addition, aging was conducted for 4 hours at the same temperature so that Polyamine Derivative 1 was obtained.

Synthesis of Polyamine Derivative 2

Charged in a similar apparatus were 101 g of triethylenetetramine (molecular weight: 146) and 464 g of a 20% aqueous solution of sodium hydroxide. Carbon disulfide (176.3 g) was reacted in a similar manner to the above synthesis of Polyamine Derivative 1, whereby Polyamine Derivative 2 was obtained.

Synthesis of Polyamine Derivative 3

Charged in a similar apparatus were 48.5 g of diethylenetriamine (molecular weight: 103) and 384 g of water. The resultant mixture was heated to 60°C, followed by the addition of 145.9 g of carbon disulfide through a dropping funnel. After completion of the dropwise addition, aging was conducted for 4 hours at the same temperature. The reaction mixture was then heated to 70-75°C, followed by the addition of 384 g of a 20% aqueous solution of sodium hydroxide. They were reacted for 1.5 hours, whereby Polyamine Derivative 3 was obtained.

Synthesis of Polyamine Derivative 4

Charged were 90.2 g of N-propyltriethylenetetramine (molecular weight: 188) and 640 g of a 15% aqueous solution of sodium hydroxide. Carbon disulfide (172.8 g) was reacted in a similar manner to the synthesis of Polyamine Derivative 1, whereby Polyamine Derivative 4 was obtained.

Synthesis of Polyamine Derivative 5

Charged were 91.5 g of β-hydroxypropylpentaethylenehexamine (molecular weight: 290) and 296 g of a 20% aqueous solution of sodium hydroxide. Carbon disulfide (112.5 g) was reacted in a similar manner to the synthesis of Polyamine Derivative 1, whereby Polyamine Derivative 5 was obtained.

Four kinds of aqueous solutions were treated using metal scavengers which were obtained by mixing the above-obtained polyethyleneimine derivative and polyamine derivative and if necessary, sodium sulfides in the proportions given below (all solid wt.%). Note that Polyethyleneimine Derivative 2 and Polyethylene Derivative 1 were used singly in Comparative Examples 1 and 2, respectively.

Compositions of Metal Scavengers

Example 1

| | |
|---|---|
| Polyethyleneimine Derivative 3 | 1.3 wt.% |
| Polyamine Derivative 1 | 8.7 wt.% |

Example 2

| | |
|---|---|
| Polyethyleneimine Derivative 2 | 2.8 wt.% |
| Polyamine Derivative 2 | 7.2 wt.% |

Example 3

| | |
|---|---|
| Polyethyleneimine Derivative 1 | 2 wt.% |
| Polyamine Derivative 3 | 8 wt.% |

Example 4

| | |
|---|---|
| Polyethyleneimine Derivative 2 | 1.5 wt.% |
| Polyamine Derivative 4 | 8.5 wt.% |

Example 5

| | |
|---|---|
| Polyethyleneimine Derivative 3 | 2.5 wt.% |
| Polyamine Derivative 5 | 7.5 wt.% |

Example 6

| | |
|---|---|
| Metal scavenger of Example 1 | 8.0 wt.% |
| Sodium monosulfide | 2.0 wt.% |

Example 7

| | |
|---|---|
| Metal scavenger of Example 3 | 9.0 wt.% |
| Sodium pentasulfide | 1.0 wt.% |

Example 8

| | |
|---|---|
| Metal scavenger of Example 5 | 8.5 wt.% |
| Sodium hydrogensulfide | 1.5 wt% |

Comparative Example 1

Polyethyleneimine Derivative 2 was used singly.

Comparative Example 2

Polyamine Derivative 1 was used singly.

Comparative Example 3

Polyethyleneimine Derivative 4          1.3 wt.%
Polyamine Derivative 1          8.7 wt.%

Comparative Example 4

Metal scavenger of Com. Ex. 3          8.0 wt.%
Sodium monosulfide          2.0 wt.%

The aqueous solutions provided for the treatment were an aqueous nickel solution [content of nickel (II) ions: 50 ppm, pH: 6.8], an aqueous manganese solution [content of manganese (II) ions: 50 ppm, pH: 5.6), an aqueous cobalt solution [content of cobalt (II) ions: 50 ppm, pH: 4.6], and an aqueous chromium solution [content of chromium (III) ions: 50 ppm, pH: 4.0].

Treatment was conducted in the following manner. one liter portions of each of the aqueous solutions to be treated were respectively added with 70 mg of the metal scavengers (as mixtures of the metal scavengers and the corresponding sodium sulfides in Examples 6, 7 and 8 and Comparative Example 4). Each of the resultant mixtures was stirred for 5 minutes and then left over. The time until sedimentation of formed sedimentation was measured. After the floc thus formed was filtered off, the concentrations of metal ions remaining in the filtrate were measured by atomic absorption spectrometry. The measurement results of floc sedimentation time, the quantity of the floc formed, the water content of cake formed as a result of collection of the floc by filtration and the concentrations of metal ions remaining in the filtrate are summarized in Table 1. The water content of the cake is shown by expressing, in terms of wt.%, the amount of evaporated water as measured by the infrared irradiation method.

EP 0 433 580 B1

## Table 1

| | | Floc sedimentation time (min) | | | | Quantity of floc formed (mℓ) | | | | Water content of cake (%) | | | | Remaining metal ion concentration (ppm) | | | |
|---|---|---|---|---|---|---|---|---|---|---|---|---|---|---|---|---|---|
| | | Aqueous Mn(II) soln. | Aqueous Ni(II) soln. | Aqueous Co(II) soln. | Aqueous Cr(III) soln. | Aqueous Mn(II) soln. | Aqueous Ni(II) soln. | Aqueous Co(II) soln. | Aqueous Cr(III) soln. | Mn(II) | Ni(II) | Co(II) | Cr(III) | Aqueous Mn(II) soln. | Aqueous Ni(II) soln. | Aqueous Co(II) soln. | Aqueous Cr(III) soln. |
| Example | 1 | 22 | 28 | 23 | 25 | 36 | 37 | 35 | 30 | 80 | 79 | 78 | 80 | 1.0 | 2.5 | 1.4 | 2.1 |
| | 2 | 25 | 29 | 26 | 27 | 35 | 38 | 36 | 32 | 77 | 79 | 81 | 79 | 2.3 | 3.3 | 2.6 | 2.8 |
| | 3 | 29 | 31 | 29 | 31 | 38 | 38 | 34 | 33 | 80 | 81 | 79 | 80 | 1.8 | 2.4 | 2.0 | 2.2 |
| | 4 | 24 | 29 | 25 | 26 | 37 | 39 | 38 | 34 | 78 | 79 | 78 | 79 | 1.4 | 2.5 | 2.1 | 2.3 |
| | 5 | 21 | 28 | 23 | 24 | 35 | 36 | 39 | 28 | 77 | 78 | 79 | 77 | 0.9 | 1.8 | 1.3 | 1.4 |
| | 6 | 24 | 29 | 26 | 28 | 34 | 37 | 36 | 27 | 79 | 77 | 77 | 80 | 1.1 | 2.4 | 1.4 | 2.1 |
| | 7 | 22 | 27 | 24 | 24 | 36 | 36 | 36 | 29 | 79 | 81 | 79 | 79 | 0.9 | 2.2 | 1.2 | 2.0 |
| | 8 | 23 | 28 | 25 | 26 | 35 | 35 | 37 | 30 | 76 | 77 | 79 | 78 | 1.0 | 2.5 | 1.3 | 1.9 |
| Comparative Example | 1 | 40 | 42 | 41 | 39 | 80 | 82 | 81 | 80 | 93 | 92 | 93 | 91 | 3.2 | 6.3 | 4.4 | 4.8 |
| | 2 | 45 | 48 | 49 | 44 | 85 | 88 | 87 | 84 | 93 | 94 | 94 | 92 | 4.5 | 10.2 | 9.8 | 8.3 |
| | 3 | 42 | 44 | 44 | 42 | 83 | 84 | 83 | 82 | 91 | 92 | 91 | 93 | 3.2 | 5.8 | 4.4 | 4.9 |
| | 4 | 35 | 33 | 36 | 35 | 51 | 52 | 51 | 50 | 86 | 89 | 87 | 89 | 2.9 | 4.2 | 3.0 | 3.3 |

Example 9

To 50 g of fly ash produced by incineration of waste and containing 950 ppm of lead, 125 ppm of cadmium, 5300 ppm of zinc, 130 ppm of entire chromium, 13 ppm of mercury, 160 ppm of copper and 4 ppm of nickel, 1 g of the same metal scavenger as that employed in Example 2 was added as an aqueous solution in 10 g of water. The resultant mass was kneaded thoroughly at 65-70°C for 20 minutes. With respect to the ash thus kneaded and treated and allowed to cool down to room temperature and the untreated ash, elution tests were conducted in the manner set out in Notification No. 13 of the Environment Agency, the Government of Japan. The amounts of metals eluted and the bulk densities of the ash samples both before and after the treatment were measured. The results are shown in Table 2.

Example 10

To 50 g of sludge (water content: 82%) obtained by treatment of waste water from a waste incineration plant and containing 25 ppm of mercury, 108 ppm of lead, 2 ppm of cadmium, 160 ppm of zinc and 3 ppm of nickel, 0.1 g of the same metal scavenger as that employed in Example 1 was added. The resultant mixture was mixed thoroughly for 20 minutes, followed by filtration. The concentrations of metals in the resultant filtrate were measured. The filtrate was found to contain 0.002 ppm of mercury and 0.3 ppm of lead, but cadmium, nickel and zinc were not detected.

Comparative Example 5

Polyethylene derivative 2 (0.1 g) was added to 50 g of the same sludge as that treated in Example 10, followed by through mixing for 20 minutes. The resultant mixture was filtered and the concentrations of metals in the filtrate were measured. The filtrate was found to contain 0.03 ppm of mercury, 1.2 ppm of lead, 0.5 ppm of cadmium, 20 ppm of zinc, and 2 ppm of nickel.

Example 11

To 50 g of slag containing, as metals, 0.014 ppm of mercury, 330 ppm of cadmium, 220 ppm of lead, 0.7 ppm of chromium and 100 ppm of copper, 0.5 g of the same metal scavenger as that employed in Example 5 was added as an aqueous solution in 5 g of water. The resultant mass was kneaded thoroughly for 20 minutes. With respect to the slag thus kneaded and treated, an elution test was conducted to measure the amount of metals eluted. As a result, detected were 0.001 ppm of mercury, 0.1 ppm of cadmium, 0.2 ppm of lead and 0.3 ppm of copper. Chromium was not detected.

## Table 2

| | Eluted amount of metal (ppm) | | | | | | | Bulk density (g/cm³) |
|---|---|---|---|---|---|---|---|---|
| | Pb | Cd | Zn | Cr | Hg | Cu | Ni | |
| Example 9 | 0.20 | ND* | 0.31 | 0.10 | ND | ND | 0.1 | 1.0 |
| Untreated fly ash | 50.3 | 0.25 | 15.3 | 0.45 | 0.06 | 0.09 | 1.4 | 0.3 |

\* non detected

EP 0 433 580 B1

## Claims

1. A metal scavenger comprising:

a polyamine derivative formed from a polyamine having a molecular weight not higher than 500, said polyamine derivative containing, per molecule of said polyamine, at least one dithiocarboxyl group or a salt thereof as an N-substituting group substituted for an active hydrogen atom of said polyamine; and

a polyethyleneimine derivative formed from a polyethyleneimine having an average molecular weight of at least 5,000, said polyethyleneimine derivative containing, per molecule of said polyethyleneimine, at least one dithiocarboxyl group or a salt thereof as an N-substituting group substituted for an active hydrogen atom of said polyethyleneimine, the mixing ratio of the polyamine derivative to the polyethyleneimine derivative being 9-7 : 1-3 by weight.

2. The metal scavenger of claim 1, wherein the polyamine has a molecular weight of 60-250.

3. The metal scavenger of claim 1, wherein the polyethyleneimine has a molecular weight of 10,000-200,000.

4. The metal scavenger of claim 1, wherein at least one of the polyamine derivative and polyethyleneimine derivative contains, as an additional N-substituting group, at least one of alkyl groups, acyl groups and β-hydroxyalkyl groups.

5. The metal scavenger of claim 4, wherein the additional N-substituting group is an alkyl group having 2-18 carbon atoms.

6. The metal scavenger of claim 4, wherein the additional N-substituting group is an acyl group having 2-30 carbon atoms.

7. The metal scavenger of claim 4, wherein the additional N-substituting group is a β-hydroxyalkyl group having 4-35 carbon atoms.

8. The metal scavenger of claim 1, wherein the mixing ratio of the polyamine derivative to the polyethyleneimine derivative is 9-7:1-3 by weight.

9. A process for the treatment of waste water, which comprises adding the metal scavenger of claim 1 to the waste water to adsorb metal ions contained in the waste water.

10. A process for the treatment of waste water, which comprises adding the metal scavenger of claim 1 along with a sodium sulfide to the waste water.

11. The process of claim 10, wherein the sodium sulfide is at least one sodium sulfide selected from the group consisting of sodium monosulfide, sodium disulfide, sodium trisulfide, sodium tetrasulfide, sodium pentasulfide and sodium hydrogensulfide.

12. The process of claim 10, wherein the metal scavenger of claim 1 and the sodium sulfide are added at a ratio of 1:99-99:1.

13. A process for the treatment of fly ash containing at least one heavy metal, which comprises adding and mixing the metal scavenger of claim 1 with the fly ash to immobilize the heavy metal in the presence of water.

14. A process for the treatment of slag containing at least one heavy metal, which comprises adding and mixing the metal scavenger of claim 1 with the slag to immobilize the heavy metal in the presence of water.

15. A process for the treatment of soil containing at least one heavy metal, which comprises adding and mixing the metal scavenger of claim 1 with the soil to immobilize the heavy metal in the presence of water.

16. A process for the treatment of sludge containing at least one heavy metal, which comprises adding and mixing the metal scavenger of claim 1 with the sludge to immobilize the heavy metal in the presence of water.

**Patentansprüche**

1. Metallscavenger umfassend:

   ein Polyamin-Derivat, erhalten aus einem Polyamin, dessen Molekulargewicht nicht höher als 500 ist, wobei das Polyamin-Derivat je Molekül des Polyamins mindestens eine Dithiocarboxyl-Gruppe oder ein Salz hiervon als eine N-substituierende Gruppe substituiert für ein aktives Wasserstoff-Atom des Polyamins enthält; und

   ein Polyethylenimin-Derivat, erhalten aus einem Polyethylenimin, dessen mittleres Molekulargewicht mindestens 5000 ist, wobei das Polyethylenimin-Derivat je Molekül des Polyethylenimins mindestens eine Dithiocarboxyl-Gruppe oder ein Salz hiervon als eine N-substituierende Gruppe substituiert für ein aktives Wasserstoff-Atom des Polyethylenimins enthält, mit einem Mischungsverhältnis des Polyamin-Derivates zu dem Polyethylenimin-Derivat von 9-7:1-3, bezogen auf das Gewicht.

2. Metallscavenger nach Anspruch 1,
   bei dem das Polyamin ein Molekulargewicht von 60-250 hat.

3. Metallscavenger nach Anspruch 1,
   bei dem das Polyethylenimin ein Molekulargewicht von 10000-200000 hat.

4. Metallscavenger nach Anspruch 1,
   bei dem zumindest eines der Derivate des Polyamins und Polyethylenimins als eine zusätzliche N-substituierende Gruppe, zumindest eine Gruppe aus den Alkylgruppen, Acyl-Gruppen und β-hydroxyalkyl-Gruppen enthält.

5. Metallscavenger nach Anspruch 4,
   bei dem die zusätzliche N-substituierende Gruppe eine Alkyl-Gruppe mit 2-18 Kohlenstoff-Atomen ist.

6. Metallscavenger nach Anspruch 4,
   bei dem die zusätzliche N-substituierende Gruppe eine Acyl-Gruppe mit 2 bis 30 Kohlenstoff-Atomen ist.

7. Metallscavenger nach Anspruch 4,
   bei dem die zusätzliche N-substituierende Gruppe eine β-hydroxyalkyl-Gruppe mit 4 bis 35 Kohlenstoff-Atomen ist.

8. Metallscavenger nach Anspruch 1,
   bei dem das Mischungsverhältnis des Polyamin-Derivates zu dem Polyethylenimin-Derivat 9-7:1-3, bezogen auf das Gewicht, ist.

9. Verfahren zur Abwasserbehandlung, umfassend die Zugabe des Metallscavengers gemäß Anspruch 1 zu dem Abwasser, um in dem Abwasser enthaltene Metallionen zu abdsorbieren.

10. Verfahren zur Abwasserbehandlung, umfassend die Zugabe des Metallscavengers gemäß Anspruch 1 zusammen mit einem Natriumsulfid zu dem Abwasser.

11. Verfahren nach Anspruch 10,
    bei dem das Natriumsulfid zumindest ein Natriumsulfid, ausgewählt aus der Gruppe, bestehend aus Natriumonosulfid, Natriumdisulfid, Natriumtrisulfid, Natriumtetrasulfid, Natriumpentasulfid und Natriumhydrogensulfid ist.

12. Verfahren nach Anspruch 10,
    bei dem der Metallscavenger gemäß Anspruch 1 und das Natriumsulfid im Verhältnis von 1:99 bis 99:1 zugegeben werden.

13. Verfahren zur Behandlung von mindestens ein Schwermetall enthaltender Flugasche, umfassend die Zugabe und Vermischen des Metallscavengers gemäß Anspruch 1 mit der Flugasche, um das Schwermetall in Gegenwart von Wasser zu immobiliseren.

14. Verfahren zur Behandlung von mindestens ein Schwermetall enthaltender Schlacke, umfassend die Zugabe und Vermischen des Metallscavengers gemäß Anspruch 1 mit der Schlacke, um das Schwermetall in Gegenwart von Wasser zu immobiliseren.

**15.** Verfahren zur Behandlung von mindestens ein Schwermetall enthaltender Erde, umfassend die Zugabe und Vermischen des Metallscavengers gemäß Anspruch 1 mit der Erde, um das Schwermetall in Gegenwart von Wasser zu immobilisieren.

**16.** Verfahren zur Behandlung von-mindestens ein Schwermetall enthaltendem Klärschlamm, umfassend die Zugabe und Vermischen des Metallscavengers gemäß Anspruch 1 mit dem Klärschlamm, um das Schwermetall in Gegenwart von Wasser zu immobilisieren.

**Revendications**

**1.** Piège à métaux comprenant :
un dérivé de polyamine formé d'une polyamine présentant un poids moléculaire n'excédant pas 500, ledit dérivé de polyamine contenant par molécule de ladite polyamine au moins un radical dithiocarboxyle ou un sel de celui-ci comme radical N-substituant substitué par un atome d'hydrogène actif de ladite polyamine; et
un dérivé de polyéthylène-imine formé à partir d'une polyéthylène-imine présentant un poids moléculaire moyen d'au moins 5000, ledit dérivé de polyéthylène-imine contenant par molécule de ladite polyéthylène-imine, au moins un radical dithiocarboxyle ou sel de celui-ci comme radical N-substituant substitué par un atome d'hydrogène actif de ladite polyéthylène-imine, le rapport de mélange du dérivé de polyamine au dérivé de polyéthylène-imine étant de 9-7 : 1-3 en poids.

**2.** Piège à métaux selon la revendication 1, dans lequel la polyamine présente un poids moléculaire de 60 à 250.

**3.** Piège à métaux selon la revendication 1 dans lequel la polyéthylène-imine présente un poids moléculaire de 10.000 à 200.000.

**4.** Piège à métaux selon la revendication 1, dans lequel au moins un des dérivés de polyamine et de polyéthylène-imine contient, comme radical N-substituant supplémentaire, au moins un des radicaux alkyle, acyle et β-hydroxyalkyle.

**5.** Piège à métaux selon la revendication 4, dans lequel le radical N-substituant supplémentaire est un radical alkyle présentant 2 à 18 atomes de carbone.

**6.** Piège à métaux selon la revendication 4, dans lequel le radical N-substituant supplémentaire est un radical acyle présentant 2 à 30 atomes de carbone.

**7.** Piège à métaux selon la revendication 4, dans lequel le radical N-substituant supplémentaire est un radical β-hydroxyalkyle présentant 4 à 35 atomes de carbone.

**8.** Piège à métaux selon la revendication 1, dans lequel le rapport de mélange dérivé de polyamine/dérivé de polyéthylène-imine est de 9-7:1-3 en poids.

**9.** Procédé de traitement des eaux usées qui comprend l'addition d'un piège à métaux selon la revendication 1 aux eaux usées pour adsorber les ions métalliques contenus dans les eaux usées.

**10.** Procédé de traitement des eaux usées qui comprend l'addition du piège à métaux selon la revendication 1 avec du sulfure de sodium aux eaux usées.

**11.** Procédé selon la revendication 10, dans lequel le sulfure de sodium est au moins un sulfure de sodium choisi parmi le groupe composé de monosulfure de sodium, de disulfure de sodium, de trisulfure de sodium, de tétrasulfure de sodium, de pentasulfure de sodium et de l'hydrogénosulfure de sodium.

**12.** Procédé selon la revendication 10, dans lequel le piège à métaux selon la revendication 1 et le sulfure de sodium sont ajoutés dans un rapport de 1:99-99:1.

**13.** Procédé de traitement de suie contenant au moins un métal lourd qui comprend l'addition et le mélange du piège à métaux selon la revendication 1 avec la suie pour immobiliser le métal lourd en présence d'eau.

14. Procédé de traitement de boue contenant au moins un métal lourd qui comprend l'addition et le mélange du piège à métaux selon la revendication 1 avec la boue pour immobiliser le métal lourd en présence d'eau.

15. Procédé de traitement du sol contenant au moins un métal lourd qui comprend l'addition et le mélange du piège à métaux selon la revendication 1 au sol pour immobiliser le métal lourd en présence d'eau.

16. Procédé de traitement de scories contenant au moins un métal lourd qui comprend l'addition et le mélange du piège à métaux selon la revendication 1 aux scories pour immobiliser le métal lourd en présence d'eau.